# EUROPÄISCHE PATENTSCHRIFT

(11) **EP 1 443 617 B1**
(45) Veröffentlichungstag und Bekanntmachung des Hinweises auf die Patenterteilung: **01.06.2011**
(21) Anmeldenummer: 03029143.9
(22) Anmeldetag: 18.12.2003
(51) Int. Cl.: H02B 1/04, H02B 1/052

(54) **Tragschienenanordnung für Schaltschränke**
Support rail arrangement for electrical cabinets
Ensemble rail de support pour armoires électriques

(30) Priorität: 28.01.2003 DE 20301265 U
(43) Veröffentlichungstag der Anmeldung: 04.08.2004
(73) Patentinhaber: Weidmüller Interface GmbH & Co. KG, 32760 Detmold (DE)
(72) Erfinder: Sigg, Daniel, 8232 Merishausen (CH); Schubiger, Marcel, 8474 Dinhard (CH); Spell, Peter, 32130 Enger (DE); Meier, Rene, 8224 Löhningen (CH)
(74) Vertreter: Specht, Peter

(56) Entgegenhaltungen:
- WO-A-01/13482
- DE-A- 1 946 486
- DE-A- 19 859 716
- GB-A- 2 128 820

## Beschreibung

Die Erfindung betrifft eine Tragschienenanordnung für Schaltschränke.

Derartige Anordnungen oder Tragschienensysteme sind in verschiedenen Ausführungen bekannt. So zeigt beispielsweise die Druckschrift DE 198 59 716 A1 ein Schaltschrank- Montagesystem, bei dem auf eine Montageplatte mittels Montagebrücken Geräteinseln bildende Kammplatten angeordnet sind. Auch die Druckschrift WO 01/13428 A1 offenbart ein Montagesystem mit einem Montagepaneel zum Anordnen von Befestigungselementen, an die elektrische Komponenten befestigbar sind.

Ein Problem der bestehenden Systeme besteht darin, dass sie sich einerseits nur relativ unflexibel an die gegebene Einbausituationen anpassen lassen bzw. dass der Montageaufwand zur Anpassung der Anordnung an eine gegebene Einbausituation im Schaltschrank an einer Wand oder einer Maschine zu hoch ist.

Ein weiteres Problem bestehender Systeme ist darin zu sehen, dass relativ viel Einbauraum insbesondere in der Höhe - also relativ zum Boden des Schaltschrankes senkrecht nach oben - verbraucht wird.

Zu bemängeln ist ferner die relativ große Teilevielfalt der bekannten Tragschienenanordnungen.

Die Erfindung hat die Aufgabe, wenigstens eines der vorstehend genannten Probleme zu beheben.

Die Erfindung löst diese Aufgabe durch den Gegenstand des Anspruchs 1, also durch eine Tragschienenanordnung für einen Schaltschrank, mit:
- wenigstens einem Montagepaneel, das zur Befestigung an einer Wand des Schaltschrankes ausgelegt ist;
- auf dem Montagepaneel werkzeugfrei befestigbaren Konsolenelementen; und
- an den Konsolenelementen werkzeugfrei befestigbaren oder an diese einstückig angeformte Montageschienen, die mit Tragschienenabschnitten zum Aufsetzen elektrischer Geräte wie Reihenklemmen versehen sind.

Die Erfindung ist dadurch gekennzeichnet, dass das Montagepaneel ein Lochraster mit Löchern aufweist, in welches erste Befestigungselemente der Konsolenelemente von oben steckbar und durch seitliches Verschieben oder Verdrehen arretierbar sind.

Vorteilhafte Ausgestaltungen sind den Unteransprüchen zu entnehmen.

Unter Schaltschrank sind hier sowohl ein separater, beispielsweise an einer Wand eines Raumes oder einer Maschine befestigbarer Schrank zur Aufnahme der Tragschienenanordnung und ggf. weiterer Bauelemente, als auch ein in eine Maschine oder ein Gebäude direkt integrierter Aufnahmeraum zur Aufnahme der Tragschienenanordnung und ggf. weiterer Bauelemente zu verstehen.

Unter einer "werkzeugfreien" Befestigung wird eine Befestigung verstanden, welche zumindest beim Zusammenbau kein Drehwerkzeug wie einen Schraubendreher und auch kein schlüsselartiges Drehwerkzeug erfordert. Diese Art der Befestigung bietet den Vorteil, dass sie sich besonders einfach sowohl manuell als auch automatisiert mit einem Roboter durchführen lässt. Der Roboter stellt insofern hier kein "Werkzeug" dar, sofern er nicht mit einem Drehwerkzeug wie einem Schraubendreher oder einem schlüsselartigen Drehwerkzeug versehen wird. Vorteilhaft ist auch, dass keine Festverbindung durch Kleben, Schweißen, Löten oder dgl. realisiert werden muss.

Der modulartige Aufbau der Tragschienenanordnung ermöglicht die Realisierung eines Schaltschranksystems mit nur wenigen Einzelelementen werkzeugfrei vom Anwender, aber alternativ auch eine automatisierte werkzeugfreie Vormontage mittels eines (Greif- oder Pick-and-Place-)Roboters. Dabei ist auch je nach Einbausituation und nach Art und Weise der zu verwendenden Reihenklemmen eine einfache Anpassbarkeit und Variabilität an die Gegebenheiten gegeben.

Vorzugsweise sind die Konsolenelemente mittels erster Steck- oder Drehbefestigungselemente an dem Montagepaneel befestigbar und die Montageschienen sind mittels zweiten Steck- oder Drehbefestigungselemente an dem Montagepaneel befestigbar.

Die Montage lässt sich mit diesen Schnellverschlüssen entweder einfach per Hand oder aber auch besonders vorteilhaft automatisiert z.B. nach Art einer Pick-and-Placeoder Plug-and-Play-Montage durchführen, was die Herstellung vorkonfektionierter Schaltschränke vereinfacht. Die Demontage erfolgt weitestgehend werkzeugfrei z.B. nur mit Hilfe eines Schraubendrehers.

Bevorzugt erfolgt sie auch ohne separate Befestigungselemente wie Schrauben oder dgl. sondern durch an die verschiedenen Bauelemente bereits angeformte oder an diesen vormontierte Befestigungselemente wie Bajonettverschlüsse, Haken und dgl..

Metallische Bereiche und/oder Innenteile der verschiedenen Komponenten können zur Realisierung einer PE-Verbindung genutzt werden. Ansonsten werden die Komponenten bevorzugt aus einem isolierenden Material, insbesondere einem isolierenden Kunststoff, gefertigt.

Bevorzugt weist das Montagepaneel ein Lochraster auf, in welches die hakenartigen Befestigungselemente der Konsolenelementen eingreifen, welche derart bemessen sind, dass sie von oben durch die einzelnen Löcher des Lochrasters des Montagepaneels steckbar und dann durch seitliches Verschieben oder Verdrehen in den Löchern den Rand der Löcher klemmend oder rastend arretierbar sind. Gerade diese Variante eignet sich durch ihre einfache Montierbarkeit hervorragend für eine automatisierte Montage.

Nach einer weiteren vorteilhaften Ausgestaltung, welche auch unabhängig betrachtet werden kann, wird eine Tragschienenanordnung für einen Schaltschrank geschaffen, welche folgende Merkmale aufweist: Montageschienen, die mit Tragschienenabschnitten zum Aufsetzen elektrischer Geräte wie Reihenklemmen versehen sind, welche mit Kammschienen versehen sind, welche zueinander parallele, schlitzartige Aussparungen aufweisen, durch welche Leiter in den Bereich unterhalb der Montageschienen führbar sind, wobei die Kammschienen als zu den Montageschienen separate Elemente ausgebildet sind, welche beidseits der Tragschienenabschnitte beweglich (insbesondere verschieblich) geführt sind, so dass die Breite der Montageschiene veränderbar ist.

Die einfache Einstellbarkeit der Montageschienen ermöglicht eine unkomplizierte Anpassbarkeit an die jeweils gegebenen Einbaubedingungen. Werden beispielsweise breitere Reihenklemmen eingesetzt, können die Kämme weiter ausgefahren werden als beim Einsatz schmalerer Reihenklemmen. Der Abstand der Tragschienen im Schaltschrank lässt sich somit einfach optimieren.

Auch die Verdrahtung lässt sich durch die Erfindung vereinfachen, ggf. sogar automatisieren.

Nachfolgend wird die Erfindung anhand von Ausführungsbeispielen unter Bezug auf die Zeichnung näher beschrieben. Es zeigt:
- Fig. 1: eine Seitenansicht eines ersten Ausführungsbeispiels der Erfindung in einem beispielhaften Aufbau;
- Fig. 2: eine perspektivische Ansicht von Teilen des Ausführungsbeispiels der Erfindung aus Fig. 1 in einem zweiten beispielhaften Aufbau; und

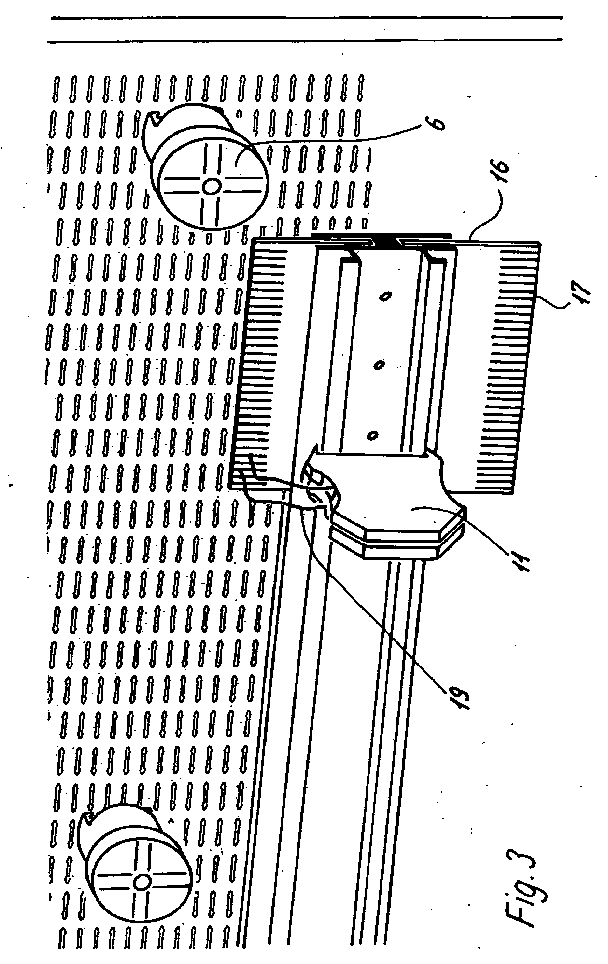

- Fig. 3: eine perspektivische Ansicht von Teilen des Ausführungsbeispiels der Erfindung aus Fig. 1 in einem weiteren beispielhaften Aufbau;
- Fig. 4: eine perspektivische Ansicht eines zweiten Ausführungsbeispiels der Erfindung.

Die nachfolgende Verwendung von Begriffen wie "oben" oder "unten", "rechts" oder "links" bezieht sich lediglich auf die gewählte Art der Darstellung und ist nicht einschränkend zu verstehen. Je nach Einbausituation des Schaltschrankes z.B. an einer Wand, Decke oder auch an einer Maschine können sich hier andere Relativbezüge ergeben. Die Erfindung ermöglicht insbesondere auch problemlos die Realisierung horizontaler und vertikaler Einbausituationen.

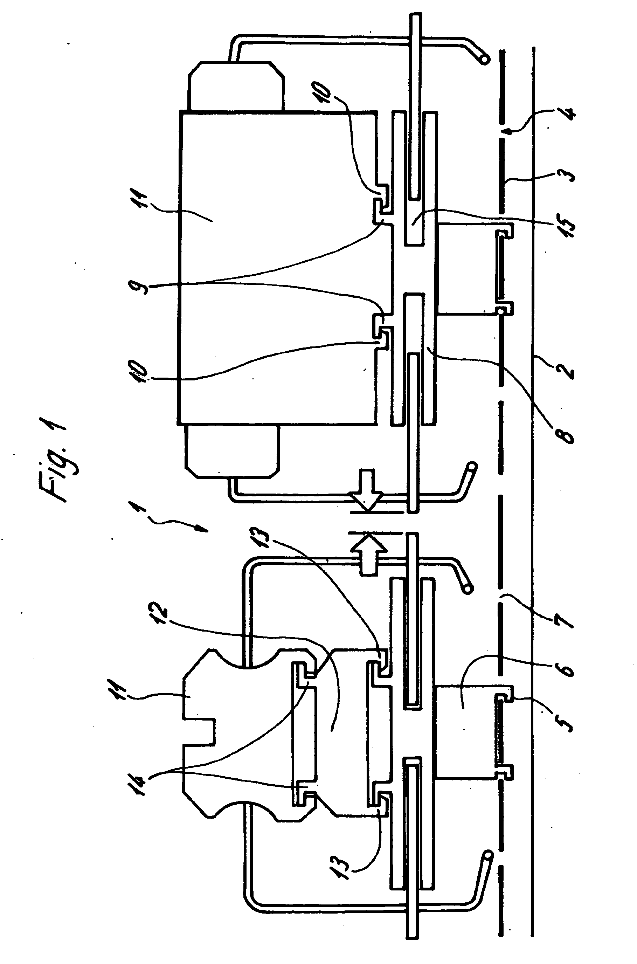

Fig. 1 zeigt eine Tragschienenanordnung 1 für einen Schaltschrank, von dem hier lediglich der Boden 2 dargestellt ist. Am Boden oder den Seiten ist wenigstens ein Montagepaneel 3 befestigt, z.B. mittels Schrauben, welche zwischen dem Boden 2 und dem Montagepaneel 3 angeordnete Distanzhülsen durchsetzen (hier nicht zu erkennen). Diese Distanzhülsen können relativ kurz ausgebildet sein, denn unterhalb des Montagepaneels wird kein Raum zur Aufnahme von Leitungen 19 zu und von den Reihenklemmen benötigt, wie dies beim Stand der Technik der Fall ist.

Das Montagepaneel 3 kann entweder durchgehend ausgebildet sein, d.h., es kann sich über die gesamte für die Tragschienenanordnung vorgesehene Fläche des Schaltschrankes erstrecken oder aber es besteht aus einer Mehrzahl einzelner kleinerer Montagepaneelelemente 3, die auf der für die Tragschienenanordnung vorgesehenen Fläche des Schaltschrankes nebeneinander angeordnet werden und dann ein übergeordnetes Montagepaneel 3 ausbilden (hier nicht dargestellt).

Das Montagepaneel 3 weist ein Lochraster 4 auf. In dieses Lochraster 4 greifen Befestigungselemente 5 von Konsolenelementen 6 ein. Die Befestigungselemente 5 sind hier hakenartig ausgebildet und derart bemessen, dass sie von oben durch die einzelnen Löcher 7 des Lochrasters 4 des Montagepaneels 3 eingesteckt werden, woraufhin sie seitlich verschoben werden, so dass sie in den Löchern den Rand der Löcher 7 klemmend oder rastend hintergreifen, was die Konsolenelemente 6 am Montagepaneel 3 arretiert. Nach einer anderen, hier nicht dargestellten Variante werden die Steckoder Drehbefestigungselemente dagegen nach Art von Bajonettverschlüssen ausgebildet.

Auf den Konsolenelementen 6 sind wiederum Montageschienen 8 befestigbar, beispielsweise mittels eines Steckverschlusses mit miteinander korrespondierenden Befestigungselementen zwischen den Montageschienen 8 und den Konsolenelementen (z.B. zusammenrastbare Steck- und Buchsenelemente).

Die Montageschienen 8 sind an ihren von den Konsolenelementen 6 abgewandten Seiten mit Tragschienenabschnitten 9 versehen, die beispielsweise einstückig an die Montageschienen 8 angeformt oder auf diese aufgesetzt sein können.

Auf die Tragschienenabschnitte 9 können elektrische Geräte wie z.B. Reihenklemmen 11 verschiedenster Bauart aufgesetzt werden, die zu den Tragschienenabschnitten 9 korrespondierende Befestigungsfüße 10 aufweisen.

Dies geschieht entweder direkt, d.h., die Reihenklemmen 11 werden direkt auf die Tragschienenabschnitte 9 aufgerastet oder aber indirekt über Zwischenadapter 12, welche an ihrer einen Seite Befestigungsfüße 13 aufweisen und die an ihrer anderen Seite mit einem den Tragschienenabschnitten 9 entsprechendem weiteren Tragschienenprofil 14 versehen sind und die ihrerseits auf die Tragschienenabschnitte aufgerastet werden. Auf diese Weise können ― falls erforderlich ― auf einfachste Weise Höhenunterschiede ausgeglichen werden.

Die Montageschienen 8 können auch rechtwinklig zueinander angeordnet werden (hier nicht dargestellt).

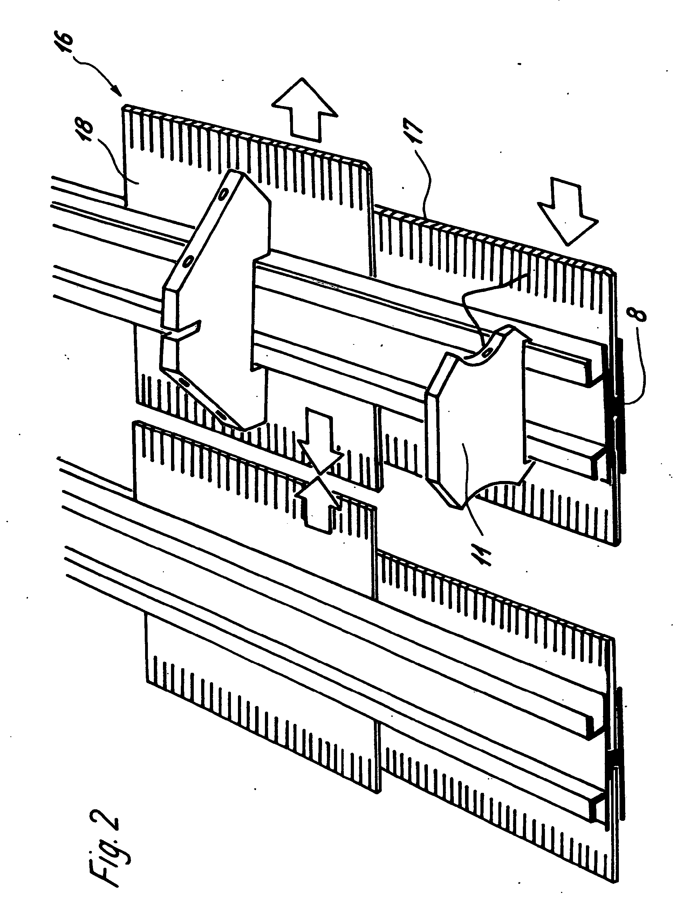

Die Montageschienen 8 erstrecken sich plattenartig rechts und links bzw. seitlich unterhalb der Tragschienenabschnitte 9 über diese hinaus. In diesem Bereich sind sie mit Kammschiene 16 versehen, welche zueinander parallele, schlitzartige Aussparungen 17 (siehe Fig. 2) aufweisen, durch welche Leiter 19 in den Bereich unterhalb der Montageschienen geführt werden.

Die Kammschienen 16 können auch zur einfachen Realisierung einer Zugentlastungsfunktion genutzt werden. Darüber hinaus decken sie die Verkabelung auf einfache Weise ab.

Hier sind die Kammschienen 16 mit den Aussparungen 17 und einem Rücken 18 als zu den Montageschienen separate Elemente ausgebildet, welche in seitlichen Nuten 15 der Montageschienen 8 beidseits der Tragschienenabschnitte 9 verschieblich geführt sind, so dass die Breite der Montageschiene 8 je nach Einbausituation schnell und einfach veränderlich bzw. an diese anpassbar ist (siehe wiederum Fig. 2).

Wie zu erkennen, können die Leiter 19 durch die Kammabschnitte 16 hindurch zu den Reihenklemmen 11 geführt werden und die weitere Verlegung der Leiter im Schaltschrank erfolgt unterhalb der Montageschienen 8 mit den Kammabschnitten 16 seitlich der Konsolenelemente 6.

Auf diese Weise wird Bauraum in der Höhe - zwischen Boden 2 und Reihenklemme 1 - eingespart und gleichzeitig eine besonders gut zugängliche , übersichtliche Verlegung der Leitungen bzw. Verkabelung im Schaltschrank realisiert.

Vorzugsweise sind die Kammschienen in vorgegebenen Positionen an den Montageschienen verrastbar (z.B. 30mm, 60mm, ...).

Die Montage der Anordnung vollständig automatisiert erfolgen. Das Verlegen der Leitungen und Kabel vom Anwender ist dagegen werkzeugfrei möglich, was die Handhabung am Einbauort vereinfacht.

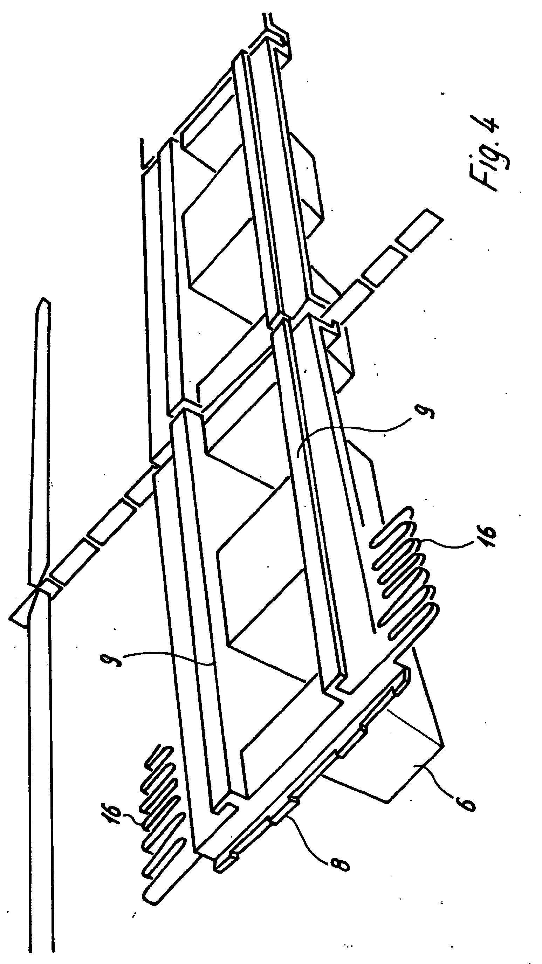

Nach Fig. 4 sind die Konsolenelementen 6 einstückig mit den Montageschienen 8 ausgestaltet, was die Montage weiter vereinfacht, wohingegen die Variante aus Fig. 1 mit den separaten Montageschienen 8 den Vorteil größerer Flexibilität bietet und von daher bevorzugt wird. Die Befestigungselemente der Konsolenelemente 6 zur Befestigung an den hier nicht dargestellten Modulpaneelen kann nach Art der Fig. 1 erfolgen.

Nach einer weiteren Variante werden an die Konsolenelemente mit Kabelführungseinrichtungen wie Kabelkanälen, Stege zur Auflage von Leitungen oder dgl. versehen, um die Kabelverlegung weiter zu vereinfachen (hier nicht dargestellt).

### Bezugszeichenliste

- Tragschienenanordnung: 1
- Boden: 2
- Montagepaneel: 3
- Lochraster: 4
- Befestigungselemente: 5
- Konsolenelemente: 6
- Löcher: 7
- Montageschienen: 8
- Tragschienenabschnitte: 9
- Befestigungsfüße: 10
- Reihenklemmen: 11
- Zwischenadapter: 12
- Befestigungsfüße: 13
- Tragschienenprofil: 14
- Nuten: 15
- Kammschienen: 16
- Aussparungen: 17
- Rücken: 18
- Leitungen: 19

## Patentansprüche

1. Tragschienenanordnung für einen Schaltschrank, mit folgenden Merkmalen:
a) wenigstens einem Montagepaneel (3), das zur Befestigung an einer Wand des Schaltschrankes ausgelegt ist;
b) auf dem Montagepaneel werkzeugfrei befestigbaren Konsolenelementen (6); und
c) an den Konsolenelementen (6) werkzeugfrei befestigbaren oder an diese einstückig angeformten Montageschienen (8), die mit Tragschienenabschnitten (9) zum Aufsetzen elektrischer Geräte wie Reihenklemmen (11) versehen sind
**dadurch gekennzeichnet, dass**
das Montagepaneel (3) ein Lochraster (4) mit Löchern (7) aufweist, in welches erste Befestigungselemente (5) der Konsolenelemente (6) von oben steckbar und durch seitliches Verschieben oder Verdrehen arretierbar sind.

2. Tragschienenanordnung nach Anspruch 1, **dadurch gekennzeichnet, dass** die Konsolenelemente (6) werkzeugfrei mittels der ersten Steck- oder Drehbefestigungselemente (5) an dem Montagepaneel (3) befestigbar sind.

3. Tragschienenanordnung nach Anspruch 1 oder 2, **dadurch gekennzeichnet, dass** die Montageschienen (8) werkzeugfrei mittels zweiten Steck- oder Drehbefestigungselemente an dem Montagepaneel (3) befestigbar sind.

4. Tragschienenanordnung nach einem der vorstehenden Ansprüche, **dadurch gekennzeichnet, dass** die Steck- oder Drehbefestigungselemente nach Art von Bajonettverschlüssen ausgebildet sind.

5. Tragschienenanordnung nach einem der vorstehenden Ansprüche, **dadurch gekennzeichnet, dass** die Steck- oder Drehbefestigungselemente nach Art von werkzeugfrei betätigbaren Schnellverschlüssen ausgebildet sind.

6. Tragschienenanordnung nach einem der vorstehenden Ansprüche, **dadurch gekennzeichnet, dass** der Raum unterhalb der Montageschienen (8) zur Verkabelung des Schaltschrankes dient.

7. Tragschienenanordnung nach einem der vorstehenden Ansprüche, **dadurch gekennzeichnet, dass** sich das Montagepaneel (3) über die gesamte für die Tragschienenanordnung vorgesehene Fläche des Schaltschrankes erstreckt.

8. Tragschienenanordnung nach einem der vorstehenden Ansprüche, **dadurch gekennzeichnet, dass** das Montagepaneel (3) aus einer Mehrzahl einzelner Montagepaneelelemente besteht.

9. Tragschienenanordnung nach einem der vorstehenden Ansprüche, **dadurch gekennzeichnet, dass** das Montagepaneel (3) werkzeugfrei am Schaltschrank befestigbar ist.

10. Tragschienenanordnung nach einem der vorstehenden Ansprüche, **dadurch gekennzeichnet, dass** die Befestigungselemente (5) hakenartig ausgebildet und derart bemessen sind, dass sie durch das seitliche Verschieben oder Verdrehen in den Löchern den Rand der Löcher (7) klemmend oder rastend arretieren.

11. Tragschienenanordnung nach einem der vorstehenden Ansprüche, **dadurch gekennzeichnet, dass** die Montageschienen (8) mit Tragschienenabschnitten (9) versehen sind, welche einstückig mit den Montageschienen (8) ausgebildet oder an diese angesetzt sind.

12. Tragschienenanordnung nach einem der vorstehenden Ansprüche,
**gekennzeichnet durch** auf die Montageschienen (8) aufrastbare Zwischenadapter (12), welche an ihrer einen Seite Befestigungsfüße (13) aufweisen, welche auf die Tragschienenabschnitte (9) aufgerastet werden und an ihrer gegenüberliegenden Seite ein den Tragschienenabschnitten (9) entsprechendes weiteres Tragschienenprofil (14).

13. Tragschienenanordnung nach einem der vorstehenden Ansprüche, **dadurch gekennzeichnet, dass** sich die Montageschienen (8) plattenartig rechts und links bzw. seitlich unterhalb der Tragschienenabschnitte (9) über diese hinaus erstrecken.

14. Tragschienenanordnung nach einem der vorstehenden Ansprüche, **dadurch gekennzeichnet, dass** die Montageschienen (8) mit Kammschienen (16) versehen sind, welche zueinander parallele, schlitzartige Aussparungen (17) aufweisen, durch welche Leiter (17) in den Bereich unterhalb der Montageschienen führbar sind.

15. Tragschienenanordnung nach einem der vorstehenden Ansprüche, **dadurch gekennzeichnet, dass** die Kammschienen (16) einstückig an die Montageschienen (8) angeformt sind.

16. Tragschienenanordnung nach einem der vorstehenden Ansprüche, **dadurch gekennzeichnet, dass** die Kammschienen (16) als zu den Montageschienen (8) separate Elemente ausgebildet sind, welche beidseits der Tragschienenabschnitte (9) verschieblich geführt sind, so dass die Breite der Montageschiene (8) veränderbar ist.

17. Tragschienenanordnung nach einem der vorstehenden Ansprüche, **dadurch gekennzeichnet, dass** die Kammschienen (16) in vorgegebenen Positionen an den Montageschienen verrastbar sind.

18. Tragschienenanordnung nach einem der vorstehenden Ansprüche, **dadurch gekennzeichnet, dass** die Einzelelemente der Tragschienenanordnung metallische Bereiche und/oder Innenteile aufweisen, die zur Realisierung einer PE-Verbindung nutzbar sind.

19. Tragschienenanordnung nach einem der vorstehenden Ansprüche, **dadurch gekennzeichnet, dass** die Konsolenelementen (6) einstückig mit den Montageschienen (8) ausgestaltet sind.

20. Tragschienenanordnung nach einem der vorstehenden Ansprüche, **dadurch gekennzeichnet, dass** die Konsolenelemente mit Kabelführungseinrichtungen wie Kabelkanälen, Stegen zur Auflage von Leitungen oder dgl. versehen sind.

## Claims

1. Support rail arrangement for an electrical cabinet, with the following characteristics:
a) at least one mounting panel (3) which is designed for fastening to a wall of the electrical cabinet;
b) console elements (6) that can be fastened to the mounting panel without tools; and
c) mounting rails (8) that can be fastened to the console elements (6) without tools or which are formed at these in one piece, which rails are provided with support rail sections (9) for attaching electrical devices such as series terminals (11),
**characterised in that**
the mounting panel (3) has a stripboard (4) with holes (7), into which first fastening elements (5) of the console elements (6) can be plugged from above and can be latched by lateral displacement or rotation.

2. Support rail arrangement according to claim 1, **characterised in that** the console elements (6) can be fastened to the mounting panel (3) without tools by means of the first plug rotation fastening means.

3. Support rail arrangement according to claim 1 or 2, **characterised in that** the mounting rails (8) can be fastened to the mounting panel (3) without tools by means of second plug or rotation fastening elements (5).

4. Support rail arrangement according to one of the previous claims, **characterised in that** the plug or rotation fastening elements are formed of the type of bayonet closures.

5. Support rail arrangement according to one of the previous claims, **characterised in that** the plug or rotation fastening elements are formed of the type of fast closures that can be actuated without tools.

6. Support rail arrangement according to one of the previous claims, **characterised in that** the space below the mounting rails (8) serves for the wiring of the electrical cabinet.

7. Support rail arrangement according to one of the previous claims, **characterised in that** the mounting panel (3) extends over the entire surface of the electrical cabinet provided for the support rail arrangement.

8. Support rail arrangement according to one of the previous claims, **characterised in that** the mounting panel (3) consists of a plurality of individual mounting panel elements.

9. Support rail arrangement according to one of the previous claims, **characterised in that** the mounting panel (3) can be fastened to the electrical cabinet without tools.

10. Support rail arrangement according to one of the previous claims, **characterised in that** the fastening elements (5) are formed in a hook-like manner and are dimensioned in such a manner that they latch the edge of the holes (7) in a clamping or latching manner by the lateral displacement or rotation in the holes.

11. Support rail arrangement according to one of the previous claims, **characterised in that** the mounting rails (8) are provided with support rail sections (9), which are formed in one piece with the mounting rails (8) or are attached to these.

12. Support rail arrangement according to one of the previous claims, **characterised by** intermediate adapters that can be latched onto the mounting rails (8), which adapters have fastening feet (13) at their one side, which are latched onto the support rail sections (9) and a further support rail profile (14) corresponding to the support rail sections (9) at their opposite side.

13. Support rail arrangement according to one of the previous claims, **characterised in that** the mounting rails (8) extend in a plate-like manner to the right and left or laterally below the support rail sections (9) from these.

14. Support rail arrangement according to one of the previous claims, **characterised in that** the mounting rails (8) are provided with comb rails (16), which have slot-like recesses (17) parallel to each other, through which conductors (17) can be guided into the region below the mounting rails.

15. Support rail arrangement according to one of the previous claims, **characterised in that** the comb rails (16) are mounted in one piece to the mounting rails (8).

16. Support rail arrangement according to one of the previous claims, **characterised in that** the comb rails (16) are formed as elements separate to the mounting rails (8), which elements are guided in a displaceable manner on both sides of the support rail sections (9), so that the width of the mounting rail (8) can be changed.

17. Support rail arrangement according to one of the previous claims, **characterised in that** the comb rails (16) can be latched to the mounting rails in predetermined positions.

18. Support rail arrangement according to one of the previous claims, **characterised in that** the individual elements of the support rail arrangement have metallic regions and/or inner parts, which can be used for realising a PE connection.

19. Support rail arrangement according to one of the previous claims, **characterised in that** the console elements (6) are designed in one piece with the mounting rails (8).

20. Support rail arrangement according to one of the previous claims, **characterised in that** the console elements are provided with cable guide devices such as cable channels, webs for the support of conductors or the like.

## Revendications

1. Ensemble rail de support pour une armoire électrique, présentant les caractéristiques suivantes :
a) au moins un panneau de montage (3) prévu pour la fixation sur une paroi de l'armoire électrique ;
b) des éléments de console (6) pouvant être fixés sans outil sur le panneau de montage ; et
c) des rails de montage (8) pouvant être fixés sans outil sur les éléments de console (6) ou formés d'un seul tenant sur ceux-ci, qui sont pourvus de sections de rail de support (9) pour le placement d'appareils électriques tels que des barrettes à bornes (11),
**caractérisé en ce que**
le panneau de montage (3) présente une trame percée (4) avec des trous (7), dans laquelle des premiers éléments de fixation (5) des éléments de console (6) peuvent être enfichés par le haut et peuvent être bloqués par déplacement latéral ou rotation.

2. Ensemble rail de support selon la revendication 1, **caractérisé en ce que** les éléments de console (6) peuvent être fixés sans outil au moyen des premiers éléments de fixation enfichables ou rotatifs (5) sur le panneau de montage (3).

3. Ensemble rail de support selon la revendication 1 ou 2, **caractérisé en ce que** les rails de montage (8) peuvent être fixés sans outil au moyen de seconds éléments de fixation enfichables ou rotatifs sur le panneau de montage (3).

4. Ensemble rail de support selon l'une quelconque des revendications précédentes, **caractérisé en ce que** les éléments de fixation enfichables ou rotatifs sont réalisés comme des fermetures à baïonnette.

5. Ensemble rail de support selon l'une quelconque des revendications précédentes, **caractérisé en ce que** les éléments de fixation enfichables ou rotatifs sont réalisés comme des fermetures rapides pouvant être actionnées sans outil.

6. Ensemble rail de support selon l'une quelconque des revendications précédentes, **caractérisé en ce que** l'espace au-dessous des rails de montage (8) sert au câblage de l'armoire électrique.

7. Ensemble rail de support selon l'une quelconque des revendications précédentes, **caractérisé en ce que** le panneau de montage (3) s'étend sur toute la surface de l'armoire électrique prévue pour l'ensemble rail de support.

8. Ensemble rail de support selon l'une quelconque des revendications précédentes, **caractérisé en ce que** le panneau de montage (3) se compose d'une pluralité d'éléments de panneaux de montage individuels.

9. Ensemble rail de support selon l'une quelconque des revendications précédentes, **caractérisé en ce que** le panneau de montage (3) peut être fixé sans outil sur l'armoire électrique.

10. Ensemble rail de support selon l'une quelconque des revendications précédentes, **caractérisé en ce que** les éléments de fixation (5) sont réalisés comme des crochets et dimensionnés de manière à bloquer par serrage ou encliquetage le bord des trous (7) par déplacement latéral ou rotation dans les trous.

11. Ensemble rail de support selon l'une quelconque des revendications précédentes, **caractérisé en ce que** les rails de montage (8) sont pourvus de sections de rail de support (9) qui sont réalisées d'un seul tenant avec les rails de montage (8) ou placées sur ceux-ci.

12. Ensemble rail de support selon l'une quelconque des revendications précédentes, **caractérisé par** des adaptateurs intermédiaires (12) pouvant être encliquetés sur les rails de montage (8), qui présentent sur un côté, des pieds de fixation (13) qui sont encliquetés sur les sections de rail de support (9) et sur leur côté opposé, un autre profilé de rail de support (14) correspondant aux sections de rail de support (9).

13. Ensemble rail de support selon l'une quelconque des revendications précédentes, **caractérisé en ce que** les rails de montage (8) s'étendent comme une plaque vers la droite ou la gauche ou latéralement au-dessous des sections de rail de support (9) au-delà de celles-ci.

14. Ensemble rail de support selon l'une quelconque des revendications précédentes, **caractérisé en ce que** les rails de montage (8) sont pourvus de rails à peigne (16) qui présentent des évidements (17) parallèles, de type fente, que peuvent traverser des conducteurs (17) dans la zone au-dessous des rails de montage.

15. Ensemble rail de support selon l'une quelconque des revendications précédentes, **caractérisé en ce que** les rails à peigne (16) sont formés d'un seul tenant sur les rails de montage (8).

16. Ensemble rail de support selon l'une quelconque des revendications précédentes, **caractérisé en ce que** les rails à peigne (16) sont réalisés comme des éléments séparés par rapport aux rails de montage (8), qui sont guidés de manière mobile de part et d'autre des sections de rail de support (9) de sorte que la largeur du rail de montage (8) puisse être modifiée.

17. Ensemble rail de support selon l'une quelconque des revendications précédentes, **caractérisé en ce que** les rails à peigne (16) peuvent être encliquetés dans des positions prescrites sur les rails de montage.

18. Ensemble rail de support selon l'une quelconque des revendications précédentes, **caractérisé en ce que** les éléments individuels de l'ensemble rail de support présentent des zones métalliques et/ou des parties intérieures qui peuvent être utilisées pour la réalisation d'une liaison en PE.

19. Ensemble rail de support selon l'une quelconque des revendications précédentes, **caractérisé en ce que** les éléments de console (6) sont configurés d'un seul tenant avec les rails de montage (8).

20. Ensemble rail de support selon l'une quelconque des revendications précédentes, **caractérisé en ce que** les éléments de console sont pourvus de dispositifs de guidage de câble tels que des conduites de câbles, des dos pour l'appui de conduites ou similaires.
